# EUROPEAN PATENT APPLICATION

(11) **EP 4 207 870 A1**
(43) Date of publication of application: **05.07.2023**
(21) Application number: 21874147.8
(22) Date of filing: 27.08.2021
(51) Int. Cl.: H04W 28/24, H04W 4/80

(54) **DATA SENDING METHOD, ELECTRONIC DEVICE, CHIP SYSTEM, AND STORAGE MEDIUM**

(30) Priority: 30.09.2020 CN 202011063176
(71) Applicant: Huawei Technologies Co., Ltd., Shenzhen, Guangdong 518129 (CN)
(72) Inventor: SHU, Haw-Wei, Shenzhen, Guangdong 518129 (CN); ZHOU, Ming, Shenzhen, Guangdong 518129 (CN); JI, Song, Shenzhen, Guangdong 518129 (CN)
(74) Representative: Pfenning, Meinig & Partner mbB
(86) International application number: PCT/CN2021/114922
(87) International publication number: WO 2022/068486

(57) **Abstract**

Embodiments of this application provide a data sending method, an electronic device, a chip system, and a storage medium, which are applied to a first electronic device. The first electronic device performs a first service through a first Wi-Fi connection to a second electronic device, and performs a second service through a second Wi-Fi connection to a third electronic device. The first Wi-Fi connection and the second Wi-Fi connection use a same channel of a same frequency band. The data sending method includes: obtaining first data of a first service at a first moment, and obtaining second data of a second service at a second moment, where the first moment is earlier than the second moment, and a priority of the first data is lower than a priority of the second data; and sending the second data at a third moment, and sending the first data at a fourth moment, where the third moment is earlier than the fourth moment. In a scenario in which an electronic device communicates with two other devices through Wi-Fi on a same channel of a same frequency band, high-priority data is preferably sent, and a transmission delay is reduced.

## Description

This application claims priority to Chinese Patent Application No. 202011063176.3, filed with the China National Intellectual Property Administration on September 30, 2020 and entitled "DATA SENDING METHOD, ELECTRONIC DEVICE, CHIP SYSTEM, AND STORAGE MEDIUM", which is incorporated herein by reference in its entirety.

### TECHNICAL FIELD

Embodiments of this application relate to the field of communication technologies, and in particular, to a data sending method, an electronic device, a chip system, and a storage medium.

### BACKGROUND

A wireless fidelity (wireless fidelity, Wi-Fi) technology is a widely used wireless network transmission technology. With continuous popularization and rapid growth of Wi-Fi devices, Wi-Fi application scenarios are ever-increasing. The Wi-Fi device may simultaneously communicate with a plurality of devices through Wi-Fi. For example, in an application scenario, a mobile phone operates in a wireless station (station, STA) mode to connect to an access point (access point, AP) for internet access, and also operates in a Wi-Fi peer-to-peer (peer-to-peer, P2P) mode to perform a file sharing service or a projection service.

Currently, when the Wi-Fi device simultaneously communicates with the plurality of devices through Wi-Fi, the Wi-Fi device may operate on a same channel of a single frequency band. The Wi-Fi device sends data in a time division multiplexing manner. As a result, a high-priority service cannot be timely scheduled, and a data transmission delay increases.

### SUMMARY

Embodiments of this application provide a data sending method, an electronic device, a chip system, and a storage medium. When communicating with two other devices through Wi-Fi on a same channel of a same frequency band, an electronic device considers a data priority during service data sending, so that high-priority data is preferably sent, and a transmission delay is reduced.

According to a first aspect, a data sending method is provided, applied to a first electronic device. The first electronic device performs a first service through a first Wi-Fi connection to a second electronic device. The first electronic device performs a second service through a second Wi-Fi connection to a third electronic device. Both the first Wi-Fi connection and the second Wi-Fi connection use a first channel of a first frequency band. The method includes: obtaining first data of the first service at a first moment, and obtaining second data of the second service at a second moment, where the first moment is earlier than the second moment, and a priority of the first data is lower than a priority of the second data; and sending the second data at a third moment, and sending the first data at a fourth moment, where the third moment is earlier than the fourth moment.

The data sending method provided in the first aspect is applicable to a scenario in which an electronic device simultaneously communicates with a plurality of devices through Wi-Fi and the electronic device operates in an SBSC mode. The electronic device obtains data of different services based on time at which the data arrives at a Wi-Fi chip. When sending the data, the electronic device determines a sending sequence based on a priority of the data, so that high-priority data is preferably sent. In the SBSC mode, a transmission delay of a high-priority service is reduced and a QoS requirement of the service is ensured.

In a possible implementation, when the first electronic device communicates with the second electronic device, the first electronic device operates in a STA mode, and the second electronic device operates in an AP mode. When the first electronic device communicates with the third electronic device, both the first electronic device and the third electronic device operate in a Wi-Fi P2P mode.

In a possible implementation, the second service is a Wi-Fi P2P service.

In a possible implementation, the second service is a projection service or a file sharing service.

In a possible implementation, the second data includes at least one of the following: projection data, video data, or audio data. At least one of the projection data, the video data, or the audio data is set as high-priority data, so that the projection data, the video data, or the audio data can be sent preferably, to shorten a data sending delay. This meets a delay requirement.

In a possible implementation, the first frequency band is a Wi-Fi 5 GHz frequency band.

In a possible implementation, there are a plurality of pieces of first data, there is at least one piece of second data, and a quantity of second data sent at the third moment is greater than a quantity of first data sent at the fourth moment. A large quantity of high-priority data is sent each time, so that a sending delay of the high-priority data is further shortened.

In a possible implementation, before the obtaining first data of the first service at a first moment, and obtaining second data of the second service at a second moment, the method further includes: running a first application to set the priority of the first data for the first data; and running a second application to set the priority of the second data for the second data. Priorities are set for data of different services, so that the data can be sent based on the priorities. This meets a QoS requirement of the service.

In a possible implementation, when sending data, the first electronic device may obtain a to-be-sent first service packet, and determine whether the first service packet has a priority. If it is determined that the first service packet has a priority, the first electronic device assigns, based on a preset correspondence between M priorities and N queues, the first service packet to a target queue corresponding to the priority of the first service packet. M and N are integers greater than 1, a quantity of service packets in an i^{th} queue that are sent by the first electronic device each time is greater than or equal to a quantity of service packets in an (i + 1)^{th} queue that are sent by the first electronic device, 1 ≤ i < M, and a priority corresponding to the i^{th} queue is higher than a priority corresponding to the (i + 1)^{th} queue. If it is determined that the first service packet does not have a priority, the first electronic device assigns the first service packet to a first queue. A quantity of service packets in the first queue that are sent by the first electronic device each time is a smallest value in N queues. Service packets in each queue are sent sequentially based on a sequence of the N queues.

In a possible implementation, a weight value is set for each queue, and the weight value is used to determine a quantity of service packets in the queue that are sent by the first electronic device each time.

In a possible implementation, the weight value is a quantity of service packets in a queue that are sent by the first electronic device each time. Alternatively, the weight value is a ratio of a preset quantity to a quantity of service packets in a queue that are sent by the first electronic device each time.

In a possible implementation, a weight value of the i^{th} queue is greater than or equal to a weight value of the (i + 1)^{th} queue.

In a possible implementation, if the first service packet has a priority, the priority of the first service packet is carried in a first field of the first service packet.

In a possible implementation, if the first service packet has a priority, the priority of the first service packet is carried in an encapsulation structure of the first service packet.

In a possible implementation, the encapsulation structure includes an skb structure.

In a possible implementation, sequentially sending the service packets in each queue based on the sequence of the N queues includes: obtaining, based on the sequence of the N queues, a quantity of remaining service packets in the first queue, determining whether the quantity of remaining service packets in the first queue is less than the quantity of service packets in the first queue that are sent by the first electronic device each time, and if it is determined that the quantity of remaining service packets in the first queue is less than the quantity of service packets in the first queue that are sent by the first electronic device each time, sending the remaining service packets in the first queue, or if it is determined that the quantity of remaining service packets in the first queue is greater than or equal to the quantity of service packets in the first queue that are sent by the first electronic device each time, sending the service packets in the first queue based on the quantity of service packets in the first queue that are sent by the first electronic device each time; obtaining a quantity of remaining service packets in the second queue, and for the second queue, performing the foregoing operation on the first queue, and so on, until service packets in the last queue are sent.

In a possible implementation, M is greater than or equal to N.

According to a second aspect, an apparatus is provided, including a unit or a means (means) configured to perform the steps in the first aspect.

According to a third aspect, an electronic device is provided, including a processor, configured to connect to a memory, and configured to invoke a program stored in the memory, to perform the method according to the first aspect. The memory may be located in the electronic device, or may be located outside the electronic device. In addition, there are one or more processors, and there are one or more memories.

According to a fourth aspect, a chip system is provided, including a processor. The processor is coupled to a memory, and the processor executes a computer program stored in the memory, to perform the method according to the first aspect.

According to a fifth aspect, a program is provided. The program is used to perform the method according to the first aspect when being executed by a processor

According to a sixth aspect, an embodiment of this application provides a computer-readable storage medium. The computer-readable storage medium stores instructions, and when the instructions are run on a computer or a processor, the method provided in the first aspect is implemented.

According to a seventh aspect, an embodiment of this application provides a program product. The program product includes a computer program, the computer program is stored in a readable storage medium, at least one processor of a device may read the computer program from the readable storage medium, and the at least one processor executes the computer program, so that the device implements the method according to the first aspect.

### BRIEF DESCRIPTION OF DRAWINGS

FIG. 1 is a schematic diagram of an application scenario to which an embodiment of this application is applicable;
FIG. 2 is a schematic diagram of a frequency band and a channel used by a mobile phone A in FIG. 1;
FIG. 3 is another schematic diagram of a frequency band and a channel used by the mobile phone A in FIG. 1;
FIG. 4 is still another schematic diagram of a frequency band and a channel used by the mobile phone A in FIG. 1;
FIG. 5 is a schematic diagram of a functional module of a terminal device according to an embodiment of this application;
FIG. 6 is a schematic diagram of another functional module of a terminal device according to an embodiment of this application;
FIG. 7 is a schematic diagram of still another functional module of a terminal device according to an embodiment of this application;
FIG. 8 is a schematic diagram of sending a service packet when a terminal device operates in an SBSC mode;
FIG. 9A and FIG. 9B are a schematic diagram of sending a service packet when a terminal device operates in an SBSC mode according to an embodiment of this application;
FIG. 10A and FIG. 10B are another schematic diagram of sending a service packet when a terminal device operates in an SBSC mode according to an embodiment of this application;
FIG. 11A and FIG. 11B are still another schematic diagram of sending a service packet when a terminal device operates in an SBSC mode according to an embodiment of this application;
FIG. 12A and FIG. 12B are yet another schematic diagram of sending a service packet when a terminal device operates in an SBSC mode according to an embodiment of this application;
FIG. 13A and FIG. 13B are still yet another schematic diagram of sending a service packet when a terminal device operates in an SBSC mode according to an embodiment of this application;
FIG. 14 is a flowchart of a data sending method according to an embodiment of this application;
FIG. 15 is a schematic diagram of a structure of a terminal device according to an embodiment of this application; and
FIG. 16 is a schematic diagram of another structure of a terminal device according to an embodiment of this application.

### DESCRIPTION OF EMBODIMENTS

The following describes embodiments of this application with reference to the accompanying drawings.

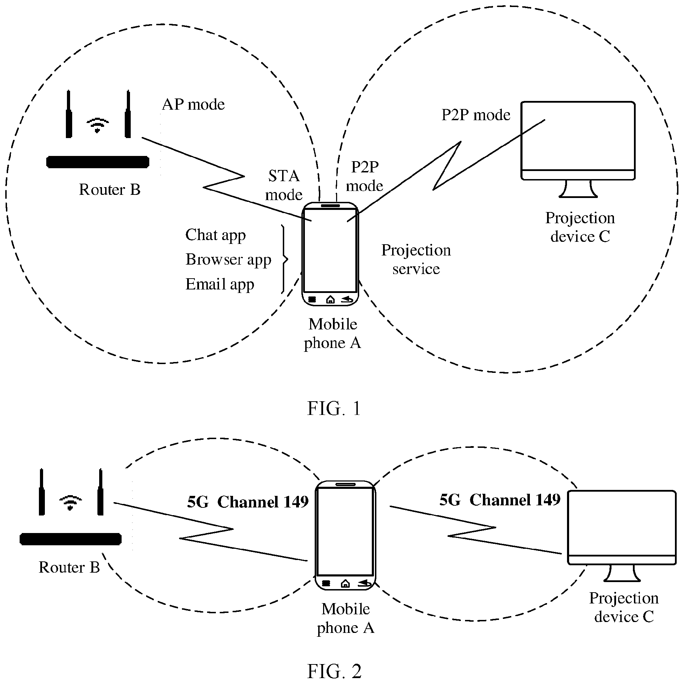

A data sending method provided in embodiments of this application is applicable to a scenario in which a terminal device simultaneously communicates with a plurality of devices through Wi-Fi. For example, FIG. 1 is a schematic diagram of an application scenario to which an embodiment of this application is applicable. As shown in FIG. 1, a mobile phone A may simultaneously communicate with a router B and a projection device C through Wi-Fi. For example, when the mobile phone A communicates with the router B through Wi-Fi, the mobile phone A may operate in a STA mode, the router B may operate in an AP mode, and an AP controls a STA to form a wireless network, which is mainly used in an application scenario such as internet access. The AP mode can provide a wireless access service, allow access of other wireless devices, and provide data access. Usually, a wireless router/bridge operates in this mode. APs can be connected to each other. The STA mode is similar to a wireless terminal. The STA does not accept wireless access but can connect to the AP. Usually, a wireless network interface card operates in this mode. The mobile phone A can communicate with the projection device C through Wi-Fi P2P. Both the mobile phone A and the projection device C operate in a Wi-Fi P2P mode. Wi-Fi P2P, also referred to as Wi-Fi Direct, enables direct communication between two devices without an AP, and is mainly used in application scenarios such as file transfer and data transmission. A common terminal device such as a mobile phone may play different roles in different scenarios. For example, the terminal device may act as a STA when accessing the internet by using a hotspot such as a router, as an AP during hotspot sharing, or as one end during P2P communication.

It should be noted that FIG. 1 does not limit an operating mode in which the mobile phone A simultaneously communicates with a plurality of devices through Wi-Fi.

It should be noted that a service implemented by the terminal device through Wi-Fi communication is not limited in embodiments of this application. For example, in FIG. 1, after the mobile phone A is wirelessly connected to the router B, the mobile phone A may run a chat application (application, app), a browser app, and an email app. The mobile phone A may send or receive text information, implement a voice call of a user, or implement a video call of the user by running the chat app. The mobile phone A may enable the user to browse a web page or watch a video by running the browser app. The mobile phone A may send or receive emails by running the email app. The mobile phone A may implement a projection service through Wi-Fi P2P communication with the projection device C. Content displayed on a screen of the mobile phone A may be displayed on the projection device C. For another example, in another implementation, a file sharing service may be performed between the mobile phone A and the projection device C.

It should be noted that, in embodiments of this application, a name and a type of the terminal device are not limited, and a quantity and a type of other devices that simultaneously communicate with the terminal device through Wi-Fi are not limited. The terminal device may also be referred to as an electronic device. Currently, for example, the terminal device is a mobile phone, a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

When the terminal device simultaneously communicates with a plurality of devices through Wi-Fi, an operating frequency band and an operating channel of the terminal device are not limited. Currently, the terminal device may operate in three modes: single band single concurrent (single band single concurrent, SBSC), dual band dual concurrent (dual band dual concurrent, DBDC), and dual band adaptive concurrent (dual band adaptive concurrent, DBAC). The following provides description with reference to FIG. 2 to FIG. 4.

### 1. SBSC

In the SBSC mode, the terminal device may operate on a same channel of a single frequency band. For example, as shown in FIG. 2, the mobile phone A communicates with the router B through Wi-Fi on a channel 149 in a 5 GHz frequency band. The mobile phone A communicates with the projection device C through Wi-Fi P2P also on the channel 149 in the 5 GHz frequency band. Because the mobile phone A operates on a same channel of a single frequency band, the mobile phone A can communicate with the router B or the projection device C at a moment by using a time division multiplexing radio frequency resource, but delay performance is poor. For example, the mobile phone A sends a packet related to the chat app to the router B at a moment T1, and sends a packet of the projection service to the projection device C at a moment T2.

### 2. DBDC

In the DBDC mode, the terminal device may operate on different frequency bands, or operate on different channels of a single frequency band. The mobile phone A can simultaneously communicate with the router B and the projection device C at a moment by using a frequency division multiplexing radio frequency resource, and delay performance is good.

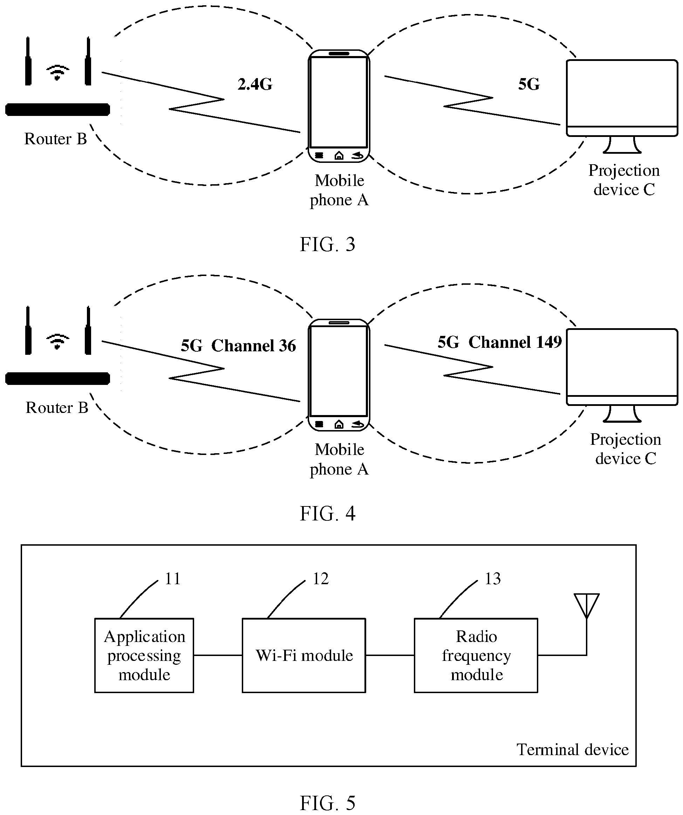

Optionally, in an implementation, as shown in FIG. 3, the mobile phone A communicates with the router B through Wi-Fi on a 2.4 GHz frequency band, and communicates with the projection device C through Wi-Fi P2P on a 5 GHz frequency band.

Optionally, in another implementation, as shown in FIG. 4, the mobile phone A communicates with the router B through Wi-Fi on a channel 36 of a 5 GHz frequency band, and communicates with the projection device C through Wi-Fi P2P on a channel 149 of the 5 GHz frequency band.

### 3. DBAC

In the DBAC mode, the terminal device can operate on different channels of a single frequency band. For example, refer to FIG. 4. The mobile phone A communicates with the router B through Wi-Fi on a channel 36 of a 5 GHz frequency band, and communicates with the projection device C through Wi-Fi P2P on a channel 149 of the 5 GHz frequency band. The mobile phone A can communicate with the router B or the projection device C at a moment by using a time division multiplexing radio frequency resource.

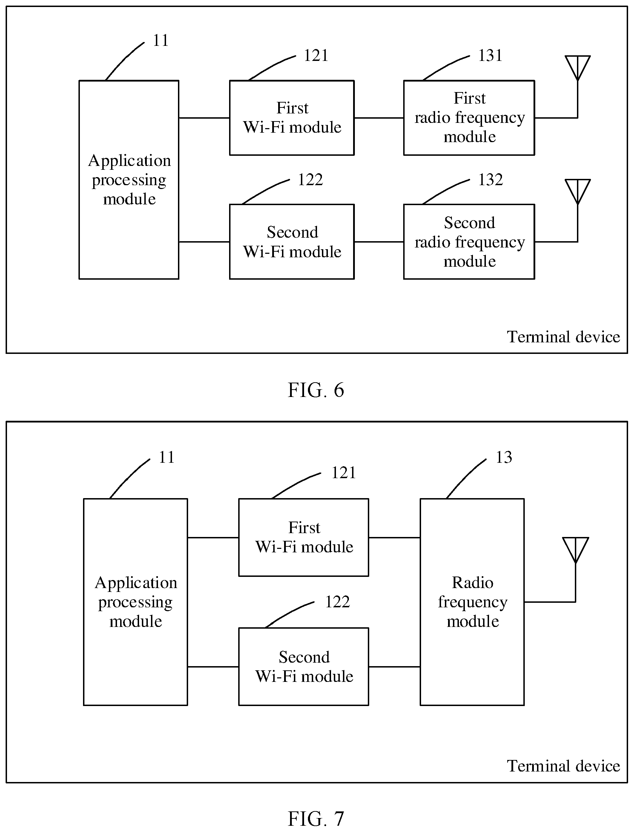

With reference to FIG. 5 to FIG. 7, the following describes an example of an applicable structure when the terminal device operates in SBSC, DBDC, or DBAC. A difference between FIG. 5, FIG. 6, and FIG. 7 lies in that the terminal device includes different quantities of Wi-Fi modules and radio frequency modules. As shown in FIG. 5, the terminal device may include an application processing module 11, a Wi-Fi module 12, and a radio frequency module 13. As shown in FIG. 6, the terminal device may include the application processing module 11, a first Wi-Fi module 121, a second Wi-Fi module 122, a first radio frequency module 131, and a second radio frequency module 132. As shown in FIG. 7, the terminal device may include the application processing module 11, the first Wi-Fi module 121, the second Wi-Fi module 122, and a radio frequency module 13. The application processing module may be configured to process first data related to an upper-layer application installed on the terminal device. The Wi-Fi module may be configured to process second data according to a wireless local area network (wireless local area network, WLAN) protocol. The WLAN protocol is not limited in embodiments of this application, and may be, for example, institute of electrical and electronics engineers (institute of electrical and electronics engineers, IEEE) 802. The radio frequency module may be configured to send or receive third data. Specific content of the first data, the second data, and the third data is not limited in embodiments of this application. For example, the first data, the second data, and the third data may include a service packet processed by the upper-layer application. It may be understood that functional modules included in the terminal device may be hardware and/or software modules.

When the terminal device operates in the SBSC mode, for a structure, refer to FIG. 5 to FIG. 7. With reference to FIG. 1, optionally, in an implementation, the mobile phone A may include one radio frequency module, for example, the radio frequency module 13 in FIG. 5 or FIG. 7. The mobile phone A communicates with the router B or communicates with the projection device C by performing time division multiplexing on the radio frequency module 13. If there are a plurality of Wi-Fi antennas, the Wi-Fi antennas are used by the radio frequency module to implement multi-input multi-output (multi-input multi-output, MIMO) and improve a channel capacity and spectral efficiency, for example, 2*2 Wi-Fi MIMO. Optionally, in another implementation, the mobile phone A may include two radio frequency modules, for example, the radio frequency module 131 and the radio frequency module 132 in FIG. 6. The mobile phone A performs time division multiplexing on the radio frequency module 131 and the radio frequency module 132 to implement communication with the router B or communication with the projection device C. In this case, a Wi-Fi antenna is separately used by the radio frequency module 131 and the radio frequency module 132, and the radio frequency module 131 and the radio frequency module 132 may jointly implement 2*2 Wi-Fi MIMO.

Optionally, in an implementation, the mobile phone A may include one Wi-Fi module, for example, the Wi-Fi module 12 in FIG. 5. A service between the mobile phone A and the router B and a service between the mobile phone A and the projection device C are processed by using the Wi-Fi module 12. Optionally, in another implementation, the mobile phone A may include two Wi-Fi modules, for example, the first Wi-Fi module 121 and the second Wi-Fi module 122 in FIG. 6 or FIG. 7. A service between the mobile phone A and the router B and a service between the mobile phone A and the projection device C may be respectively processed by using the Wi-Fi modules. For example, the first Wi-Fi module 121 is configured to process the service between the mobile phone A and the router B, and the second Wi-Fi module 122 is configured to process the service between the mobile phone A and the projection device C.

When the terminal device operates in the DBDC mode, for a structure, refer to FIG. 6. Optionally, in an implementation, with reference to FIG. 1 and FIG. 3, the first Wi-Fi module 121 and the first radio frequency module 131 in FIG. 6 may operate on the 2.4 GHz frequency band, to implement a service between the mobile phone A and the router B. The second Wi-Fi module 122 and the second radio frequency module 132 may operate on the 5 GHz frequency band, to implement a service between the mobile phone A and the projection device C. Optionally, in another implementation, with reference to FIG. 1 and FIG. 4, the first Wi-Fi module 121 and the first radio frequency module 131 in FIG. 6 may operate on a 5 GHz low frequency band, to implement a service between the mobile phone A and the router B. The second Wi-Fi module 122 and the second radio frequency module 132 may operate on a 5 GHz high frequency band, to implement a service between the mobile phone A and the projection device C.

In the DBDC mode, a Wi-Fi antenna is separately used by two radio frequency modules, and a 2*2 Wi-Fi MIMO mode in SBSC is degraded to a 2.4 GHz 1^{∗}1 + 5 GHz 1^{∗}1 mode, or a 5 GHz 1*1 + 5 GHz 1^{∗}1 mode, or a 2.4 GHz 1^{∗}1 + 2.4 GHz 1^{∗}1 mode. Consequently, MIMO performance deteriorates.

When the terminal device operates in the DBAC mode, for a structure, refer to FIG. 7. With reference to FIG. 1 and FIG. 4, the mobile phone A may communicate with the router B or communicate with the projection device C by performing time division multiplexing on the radio frequency module 13. The first Wi-Fi module 121 in FIG. 7 may operate on a 5 GHz low frequency band, to implement a service between the mobile phone A and the router B. The second Wi-Fi module 122 may operate on a 5 GHz high frequency band, to implement a service between the mobile phone A and the projection device C.

In actual application, the terminal device may use at least one of SBSC, DBDC, or DBAC. For example, the terminal device may select different modes based on factors such as a type of the terminal device, a software structure and a hardware structure of the terminal device, a preconfigured mode of the terminal device, and a type of a service implemented by the terminal device. In the SBSC mode, because a plurality of Wi-Fi antennas may operate on a same channel of a same frequency band to implement MIMO, a channel capacity and spectral efficiency are improved. However, because a radio frequency module is time-division multiplexed to send data, a high-priority service cannot be timely scheduled, a data sending delay increases, and quality of service (quality of service, QoS) of the service cannot be ensured.

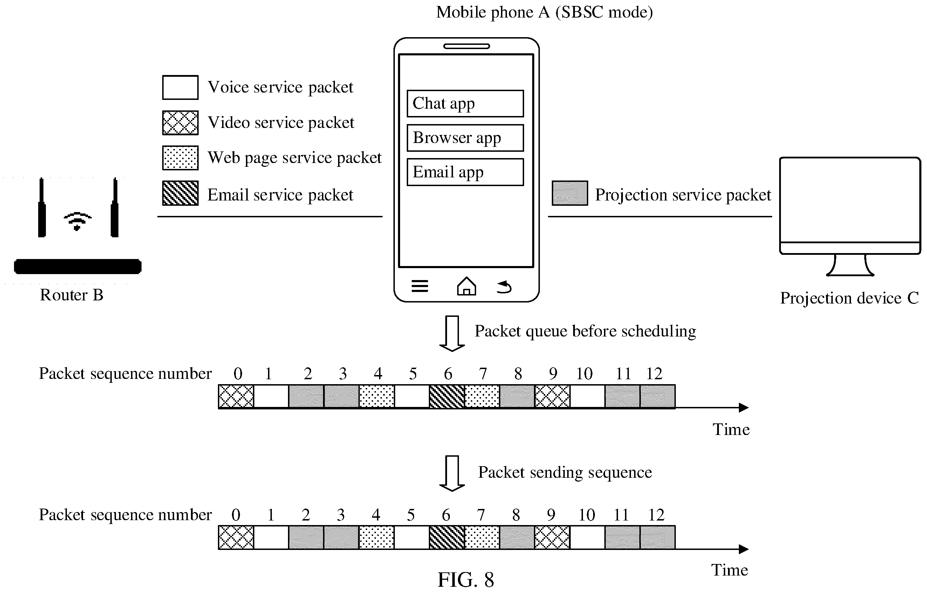

With reference to FIG. 8, the following provides an example of sending a service packet when the terminal device operates in the SBSC mode.

As shown in FIG. 8, the mobile phone A operates in the SBSC mode. After the mobile phone A is wirelessly connected to the router B, the mobile phone A may run the chat app, the browser app, and the email app in response to an instruction of the user. The chat app involves a voice service packet and a video service packet. For example, a user A sends a voice short message to a user B by using the chat app. Correspondingly, the mobile phone A obtains an audio signal input by the user A, and may generate the voice service packet by running the chat app. For another example, a user A has a video call with a user B by using the chat app. Correspondingly, the mobile phone A obtains an audio signal input by the user A by using a microphone, may obtain an image of the user A by using a camera, and may generate the video service packet by running the chat app. The browser app involves a web service packet. For example, a user A browses a web page by using the browser app. Correspondingly, the mobile phone A may generate the web page service packet by running the browser app. The email app involves an email service packet. For example, a user A edits and sends an email to a user C by using the email app. Correspondingly, the mobile phone A may generate the email service packet by running the email app. After the mobile phone A establishes a Wi-Fi P2P connection to the projection device C, the mobile phone A may generate a projection service packet by running a projection app or a system application provided by the mobile phone.

After mobile phone A generates a service packet, the service packet arrives at a Wi-Fi chip randomly. The mobile phone A obtains a packet queue before scheduling and sends service packets based on the packet queue. As shown in FIG. 8, packets included in the packet queue before scheduling are arranged based on a packet arrival sequence. For ease of description, all packets in the packet queue are numbered. A smaller number indicates that a packet arrives first, and a larger number indicates that a packet arrives later. It is assumed that the packet queue before scheduling includes 13 packets numbered from 0 to 12. A packet 0 arrives first, and a packet 12 arrives last. Packets 0 and 9 are video service packets, packets 1, 5, and 10 are voice service packets, packets 4 and 7 are web page service packets, a packet 6 is an email service packet, and packets 2, 3, 8, 11, and 12 are projection service packets. The mobile phone A sends packets based on an arrangement sequence of packets in the packet queue before scheduling. A packet sending sequence is the same as a packet arrangement sequence in the packet queue before scheduling, that is, the packet 0 is sent first, and the packet 12 is sent last.

It can be learned that, when the terminal device operates in the SBSC mode, the terminal device sends data in a time division multiplexing manner, and sequentially sends the data based on an arrival sequence of packets. As a result, a high-priority service cannot be timely scheduled. For example, a projection service packet has a high priority, but when arrival time of the projection service packet is later than that of another type of packet, the packet cannot be timely sent, and a delay increases. As a result, QoS of a service cannot be guaranteed.

An embodiment of this application provides a data sending method, applied to a scenario in which a terminal device simultaneously communicates with a plurality of devices through Wi-Fi and the terminal device operates in an SBSC mode. The terminal device may obtain priorities of service packets, and assign the service packets to different queues based on the priorities of the service packets. The terminal device may add a priority to the service packet when running an upper-layer application. Each queue corresponds to a weight value, and the weight value is used to determine a quantity of service packets in the queue that are sent by the terminal device each time. The terminal device sequentially sends the service packets in each queue based on weight values respectively corresponding to a plurality of queues. When sending service packets, the terminal device considers priorities of the service packets, so that a high-priority service packet is preferably sent. In an SBSC mode, a gain of a plurality of Wi-Fi antennas during simultaneous operation is obtained, a transmission delay of a high-priority service is reduced, and a QoS requirement of a service is met.

It should be noted that the service packet in this embodiment of this application may be transmitted through Wi-Fi communication, and a name of the service packet is not limited. For example, the service packet may also be referred to as service data, a service data packet, a packet, or the like. For ease of description, the service packet is used as an example for description in this embodiment of this application.

It should be noted that a quantity of queues is not limited in this embodiment of this application. The quantity of queues may be any integer greater than 1.

It should be noted that the weight value of each queue is not limited in this embodiment of this application. Weight values of different queues may be the same or different. Weight values corresponding to all queues have at least two values. An example is used for description. In an example, there are four queues marked as queues 1 to 4, and corresponding weight values are 4, 2, 1, and 1, respectively. The weight value may be a quantity of service packets in a queue that are sent by the terminal device each time. In this case, the terminal device may send four packets in a queue 1, two packets in a queue 2, one packet in a queue 3, or one packet in a queue 4 each time. In another example, there are three queues marked as queues 1 to 3, and corresponding weight values are 3, 2, and 1, respectively. The weight value may be a ratio of a quantity of service packets in a queue that are sent by the terminal device each time to a preset quantity. For example, if the preset quantity is 1, the terminal device may send three packets in a queue 1, two packets in a queue 2, or one packet in a queue 3 each time. For another example, if the preset quantity is 2, the terminal device may send 6 (the weight value 3 x the preset quantity 2) packets in a queue 1, 4 (2 x 2) packets in a queue 2, or 2 (1 × 2) packets in a queue 3 each time.

It should be noted that a quantity of service packets in a queue that are sent by the terminal device each time is a maximum quantity of packets that can be sent. During actual sending, if a quantity of remaining service packets in a queue is greater than or equal to the maximum quantity, the terminal device may send the maximum quantity of service packets in the queue. If a quantity of remaining service packets in a queue is less than the maximum quantity, the terminal device may send all remaining service packets in the queue. For example, it is determined, based on the weight value, that six service packets in a queue 1 are sent by the terminal device each time. In this case, when there are seven remaining packets in the queue 1, the terminal device may send six packets; and when there are five remaining packets in the queue 1, the terminal device may send five packets.

It should be noted that a correspondence between a queue and a priority of a service packet is not limited in this embodiment of this application. Optionally, a quantity of queues may be the same as a quantity of priorities, and queues and priorities may be in a one-to-one correspondence. For example, there are four queues marked as queues 1 to 4. The service packets have four priorities marked as priorities 1 to 4. The priority 1 is the highest, and the priority 4 is the lowest. The service packets with the priorities 1 to 4 can be assigned to the queues 1 to 4. Optionally, a quantity of queues may be less than a quantity of priorities, there is at least one queue, and the queue corresponds to at least two priorities. For example, there are three queues marked as queues 1 to 3. The service packets have five priorities marked as priorities 1 to 5. The priority 1 is the highest, and the priority 5 is the lowest. In an implementation, a service packet with the priority 1 may be assigned to the queue 1, service packets with the priority 2 and the priority 3 may be assigned to the queue 2, and service packets with the priority 4 and the priority 5 may be assigned to the queue 3. In another implementation, a service packet with the priority 1 may be assigned to the queue 1, a service packet with the priority 2 may be assigned to the queue 2, and service packets with the priorities 3 to 5 may be assigned to the queue 3. A weight value of a queue corresponding to a high priority is greater than or equal to a weight value of a queue with a low priority.

It should be noted that a correspondence between a type of a service packet and a priority of the service packet is not limited in this embodiment of this application. Optionally, a quantity of types of service packets may be the same as a quantity of priorities, and the types and priorities of the service packet may be in a one-to-one correspondence. For example, if there are four types of service packets, the service packets are marked as types 1 to 4. The service packets have four priorities marked as priorities 1 to 4. The priority 1 is the highest, and the priority 4 is the lowest. The types 1 to 4 of the service packets are in a one-to-one correspondence with the priorities 1 to 4 of the service packets. For example, the type 1 of the service packet corresponds to the priority 1 of the service packet. Optionally, a quantity of types of service packets is greater than a quantity of priorities, there is at least one priority, and the priority corresponds to at least two types of service packets. For example, if service packets have three priorities, the service packets are marked with priorities 1 to 3. There are five types of service packets marked as types 1 to 5. In an implementation, the type 1 of the service packet corresponds to the priority 1, the types 2 and 3 of the service packets correspond to the priority 2, and the types 4 and 5 of the service packets correspond to the priority 3. In another implementation, the type 1 of the service packet corresponds to the priority 1, the type 2 of the service packet corresponds to the priority 2, and the types 3 to 5 of the service packets correspond to the priority 3.

It should be noted that a type of a service packet is not limited in this embodiment of this application, and there may be different implementations based on setting of the terminal device or a type of an upper-layer application. Optionally, the type of the service packet may include but is not limited to at least one of the following: a voice service packet, a video service packet, a web page service packet, an email service packet, a game service packet, a projection service packet, or a file sharing service packet.

It should be noted that a correspondence between an upper-layer application and a type of a service packet is not limited in this embodiment of this application. An application may involve at least one type of service packet. For example, as shown in FIG. 8, a chat app may involve a voice service packet and a video service packet.

It should be noted that, according to the data sending method provided in this embodiment of this application, an application scenario may be as follows: A plurality of types of applications are installed on a terminal device, and an application provided by a system is further installed. Due to different developers and versions, some applications support adding priorities to service packets, but some applications do not. Correspondingly, by running different applications, the terminal device may add a priority to the service packet, or may not add a priority to the service packet. In this embodiment of this application, that the service packet does not have a priority may also be understood as having a lowest priority. For example, there are three queues marked as queues 1 to 3. The service packets have three priorities marked as priorities 1 to 3. The priority 1 is the highest, and the priority 3 is the lowest. In an implementation, a service packet with the priority 1 may be assigned to the queue 1, a service packet with the priority 2 may be assigned to the queue 2, and a service packet with the priority 3 and a service packet without a priority may be assigned to the queue 3. In another implementation, a service packet with the priority 1 may be assigned to the queue 1, service packets with the priority 2 and the priority 3 may be assigned to the queue 2, and a service packet without a priority may be assigned to the queue 3.

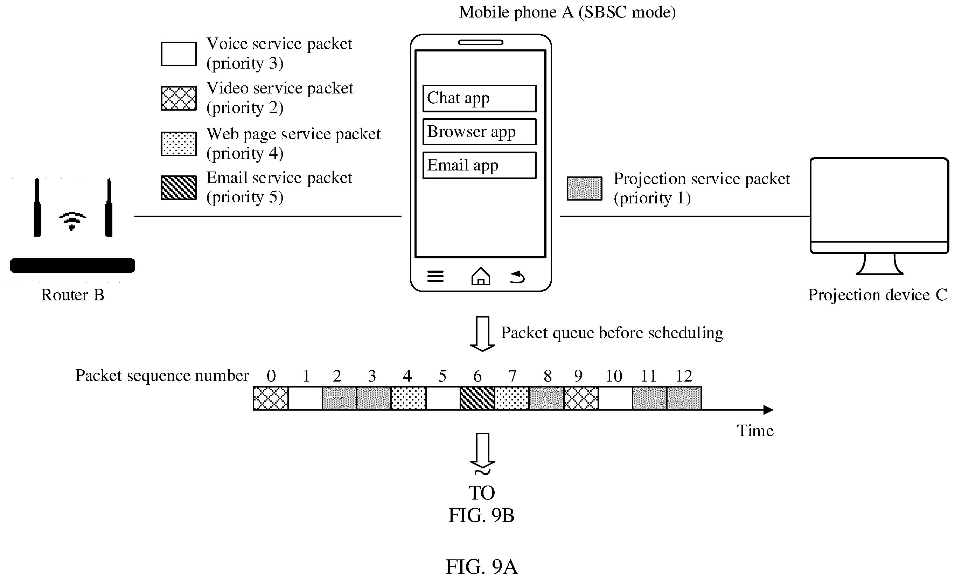

With reference to FIG. 9A to FIG. 13B, the following describes an example of sending a service packet by a terminal device by using the data sending method provided in embodiments of this application. In FIG. 9A to FIG. 13B, for a type of a service packet and a packet queue before scheduling, refer to related descriptions in FIG. 8. Details are not described herein again. In each example, a weight value of a queue directly indicates a quantity of service packets in the queue that are sent by the terminal device each time.

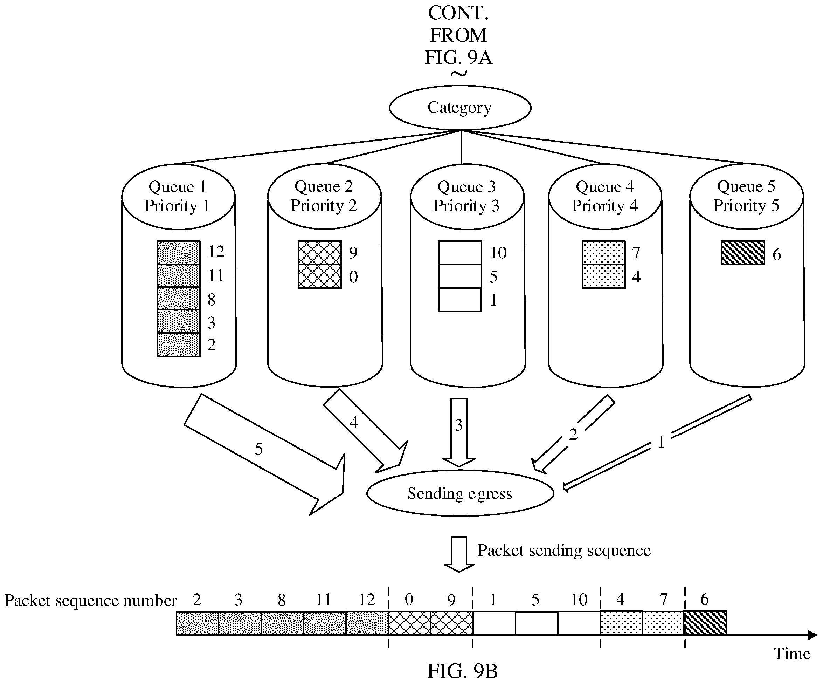

Optionally, in an example, as shown in FIG. 9A and FIG. 9B, the service packets have five priorities marked as priorities 1 to 5. The priority 1 is the highest, and the priority 5 is the lowest. Priorities of a projection service packet, a video service packet, a voice service packet, a web page service packet, and an email service packet are 1 to 5, respectively. There are five queues marked as queues 1 to 5. A mobile phone A may obtain a priority of each packet in a packet queue before scheduling, and assign the service packet to different queues based on the priority of the service packet. Specifically, service packets with the priorities 1 to 5 are respectively assigned to the queues 1 to 5. The queue 1 includes packets 2, 3, 8, 11, and 12, all of which are projection service packets. The queue 2 includes packets 0 and 9, both of which are video service packets. The queue 3 includes packets 1, 5, and 10, all of which are audio service packets. The queue 4 includes packets 4 and 7, both of which are web page service packets. The queue 5 includes a packet 6, which is an email service packet. Weight values of the queues 1 to 5 are 5, 4, 3, 2, and 1, respectively. To be specific, the mobile phone A may send five packets in the queue 1, four packets in the queue 2, three packets in the queue 3, two packets in the queue 4, or one packet in the queue 5 each time. The mobile phone A sequentially sends service packets in each queue based on weight values respectively corresponding to a plurality of queues. A packet sending sequence (represented by numbers) is successively 2, 3, 8, 11, 12, 0, 9, 1, 5, 10, 4, 7, and 6. It can be learned that, when sending service packets, the terminal device considers priorities of the service packets, so that a high-priority service packet is preferably sent. For example, the mobile phone A preferably sends five projection service packets each time. Therefore, when the terminal device operates in an SBSC mode, a transmission delay of a high-priority service is reduced, and a QoS requirement of the service is met. In addition, a low-priority service packet is sent in a small proportion. For example, the email service packet is located in the queue 5, and the mobile phone A sends one email service packet each time. However, the low-priority service packet may also be sent. A low-priority service function is not affected.

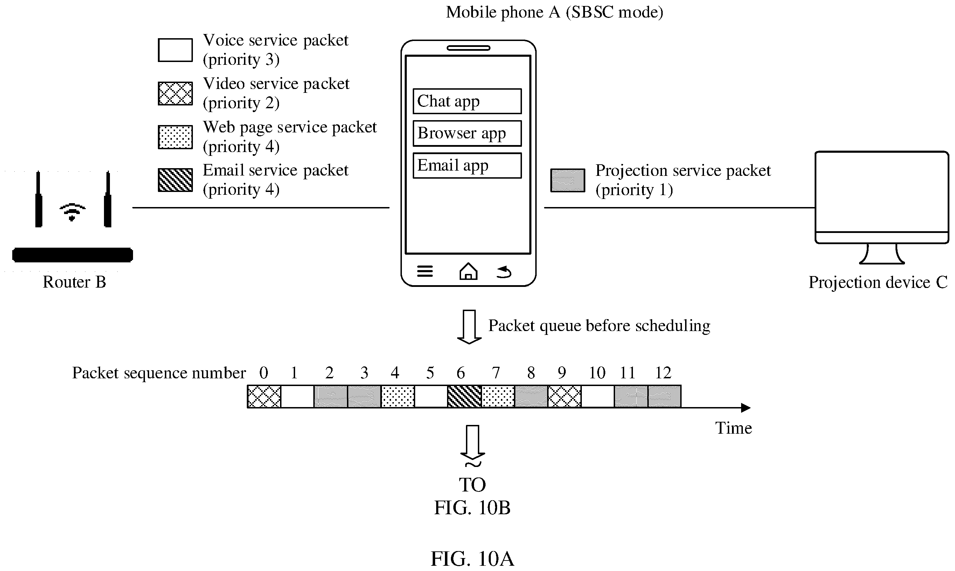

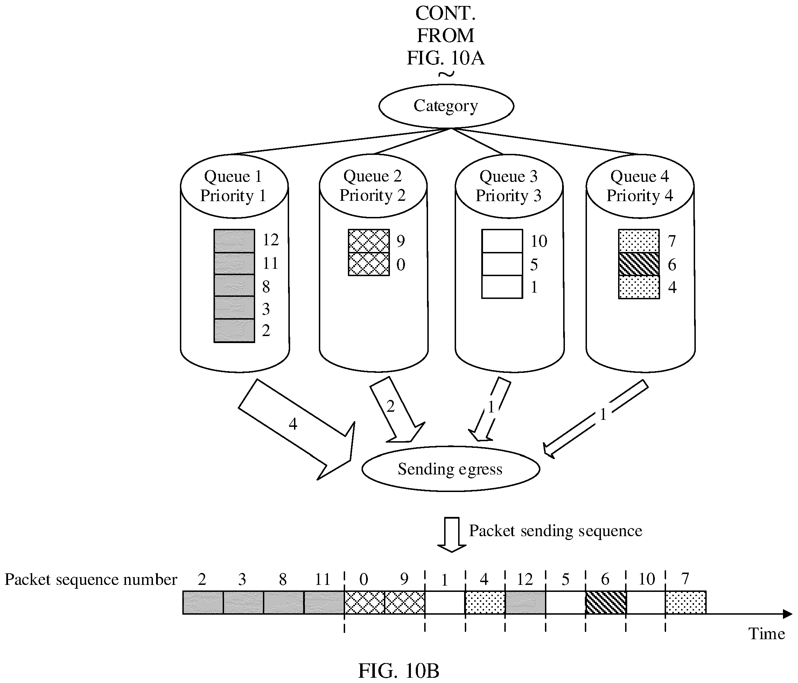

Optionally, in another example, as shown in FIG. 10A and FIG. 10B, the service packets have four priorities marked as priorities 1 to 4. The priority 1 is the highest, and the priority 4 is the lowest. There are four queues marked as queues 1 to 4. Service packets with the priorities 1 to 4 are respectively assigned to the queues 1 to 4. A difference between this example and the example shown in FIG. 9A and FIG. 9B lies in that, in this example, one priority may correspond to a plurality of types of service packets. For example, priorities of a web page service packet and an email service packet are both the priority 4. After a mobile phone A assigns the service packets, the queues 1 to 3 are the same as the queues 1 to 3 in FIG. 9A and FIG. 9B. The queue 4 includes packets 4, 6, and 7, which are the web page service packet and the email service packet. Weight values of the queues 1 to 4 are 4, 2, 1, and 1, respectively. The mobile phone A sequentially sends service packets in each queue based on weight values respectively corresponding to a plurality of queues. Packets (represented by numbers) sent in the first round include: 2, 3, 8, 11, 0, 9, 1, and 4. Remaining packets in each queue include: a packet 12 in the queue 1, packets 5 and 10 in the queue 3, and packets 6 and 7 in the queue 4. The mobile phone A continues to send service packets in each queue based on the weight values respectively corresponding to the plurality of queues. Packets sent in the second round include 12, 5, and 6, and packets sent in the third round include 10 and 7. Finally, a packet sending sequence is 2, 3, 8, 11, 0, 9, 1, 4, 12, 5, 6, 10, and 7.

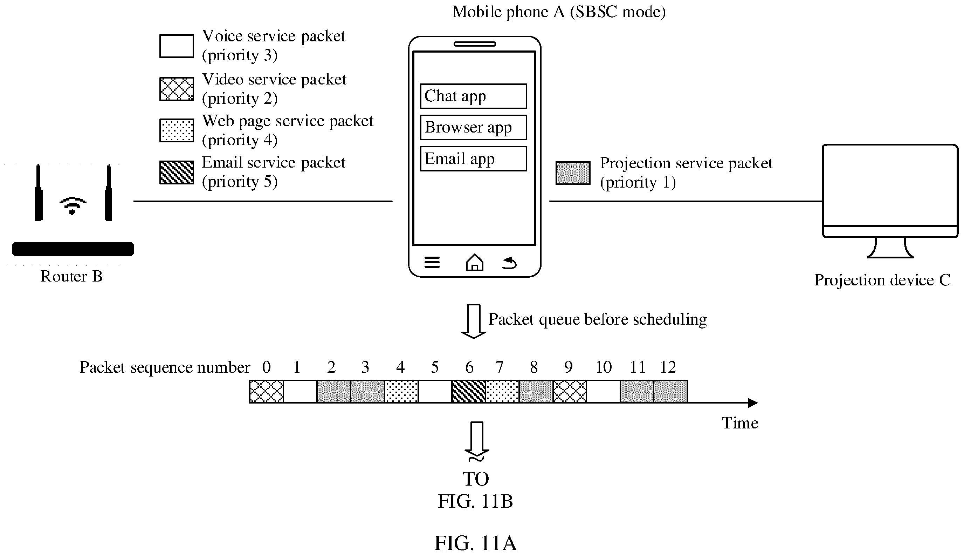

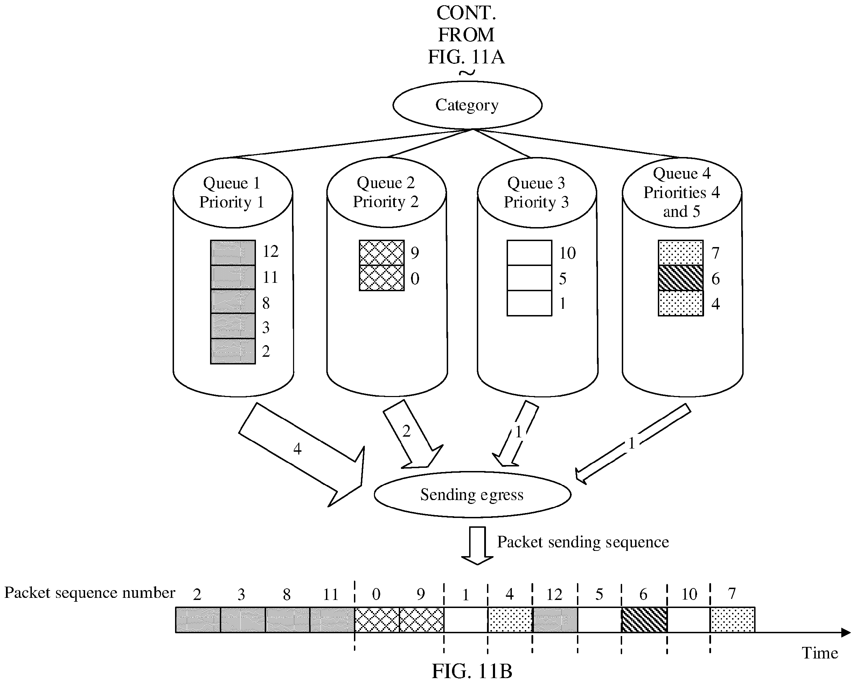

Optionally, in still another example, as shown in FIG. 11A and FIG. 11B, the service packets have five priorities marked as priorities 1 to 5. The priority 1 is the highest, and the priority 5 is the lowest. There are four queues marked as queues 1 to 4. A difference between this example and the example shown in FIG. 9A and FIG. 9B lies in that, in this example, one queue may correspond to a plurality of priorities of service packets. For example, service packets with the priorities 4 and 5 may be assigned to the queue 4. After a mobile phone A assigns the service packets, the queues 1 to 3 are the same as the queues 1 to 3 in FIG. 9A and FIG. 9B. The queue 4 includes packets 4, 6, and 7, which are a web page service packet and an email service packet. Weight values of the queues 1 to 4 are 4, 2, 1, and 1, respectively. The mobile phone A sequentially sends service packets in each queue based on weight values respectively corresponding to a plurality of queues. A packet sending sequence is the same as that in FIG. 10A and FIG. 10B. Details are not described herein again.

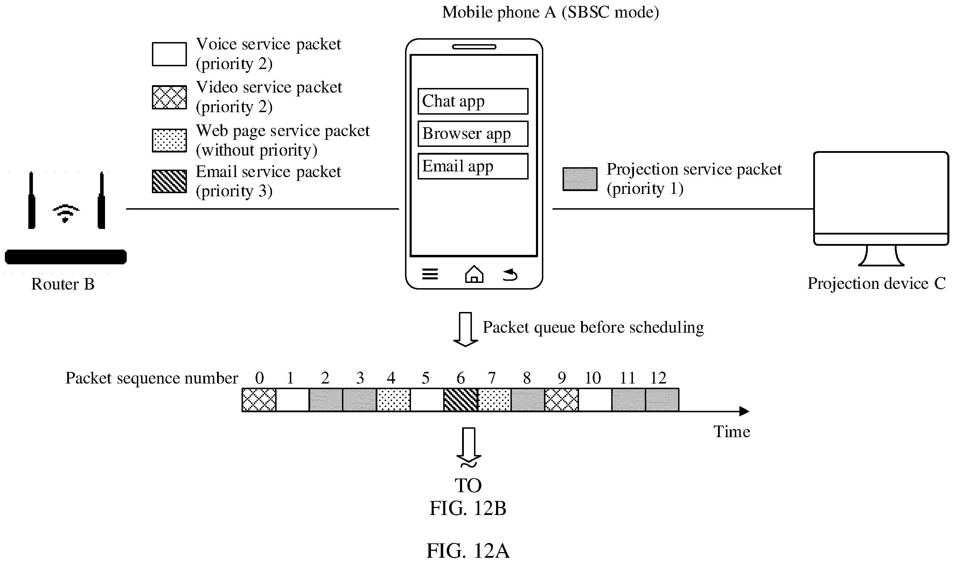

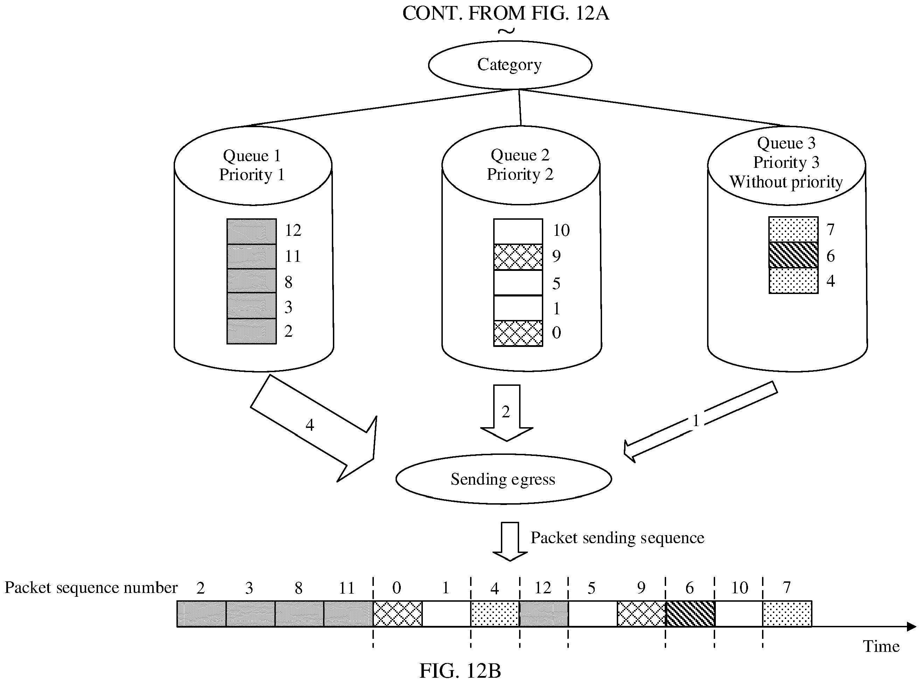

Optionally, in yet another example, as shown in FIG. 12A and FIG. 12B, the service packets have three priorities marked as priorities 1 to 3. The priority 1 is the highest, and the priority 3 is the lowest. A priority of a projection service packet is the priority 1, a priority of a video service packet and a priority of a voice service packet are the priority 2, and a priority of a mail service packet is the priority 3. There are three queues marked as queues 1 to 3. A difference between this example and the examples shown in FIG. 9A to FIG. 11B lies in that, in this example, some service packets do not have a priority. For example, the web page service packet does not have a priority. In this example, a service packet with the priority 1 may be assigned to the queue 1, a service packet with the priority 2 may be assigned to the queue 2, and service packets with the priority 3 and without a priority may be assigned to the queue 3. A weight value of the queue 3 is the smallest. After a mobile phone A assigns the service packets, the queue 1 includes packets 2, 3, 8, 11, and 12, all of which are projection service packets. The queue 2 includes packets 0, 1, 5, 9, and 10, which are the voice service packet and the video service packet. The queue 3 includes packets 4, 6, and 7, which are the web page service packet and the email service packet. Weight values of the queues 1 to 3 are 4, 2, and 1, respectively. The mobile phone A sequentially sends service packets in each queue based on weight values respectively corresponding to a plurality of queues. Packets (represented by numbers) sent in the first round include: 2, 3, 8, 11, 0, 1, and 4. Packets sent in the second round include: 12, 5, 9, and 6. Packets sent in the third round include 10 and 7.

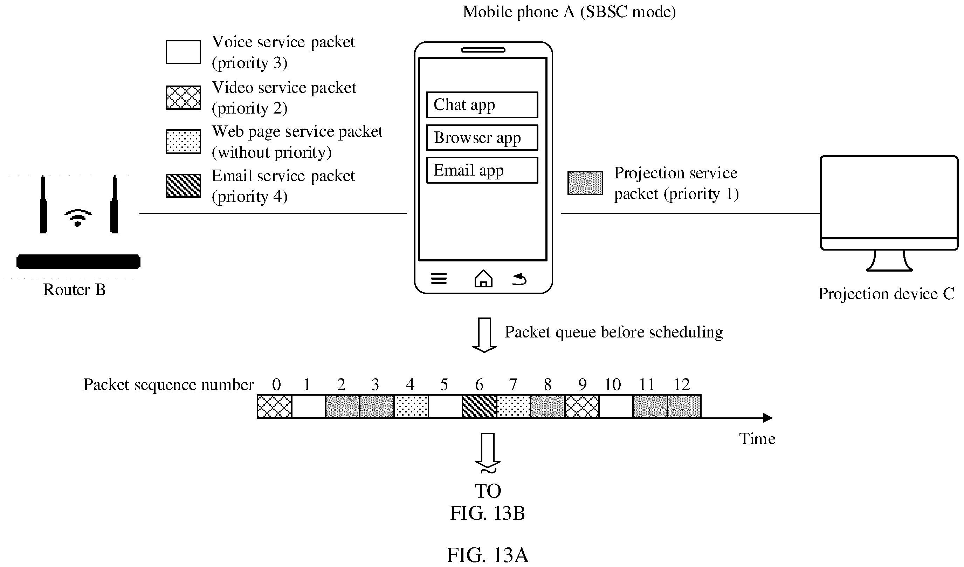

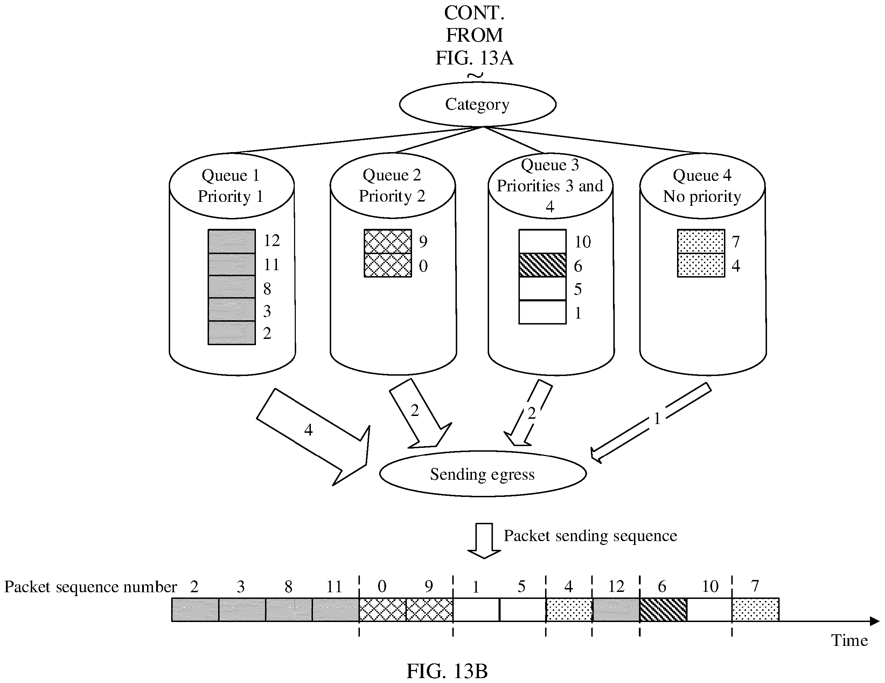

Optionally, in still yet another example, as shown in FIG. 13A and FIG. 13B, the service packets have four priorities marked as priorities 1 to 4. The priority 1 is the highest, and the priority 4 is the lowest. There are four queues marked as queues 1 to 4. A difference between this example and the example shown in FIG. 12A and FIG. 12B lies in that: in this example, a service packet without a priority is separately assigned to one queue, for example, the queue 4. A weight value of the queue is a smallest value among weight values of all queues. After a mobile phone A assigns the service packets, the queue 1 includes packets 2, 3, 8, 11, and 12, all of which are projection service packets. The queue 2 includes packets 0 and 9, both of which are video service packets. The queue 3 includes packets 1, 5, 6, and 10, which are a voice service packet and an email service packet. The queue 4 includes packets 4 and 7, which are web service packets and do not have a priority. Weight values of the queues 1 to 4 are 4, 2, 2, and 1, respectively. The mobile phone A sequentially sends service packets in each queue based on weight values respectively corresponding to a plurality of queues. Packets (represented by numbers) sent in the first round include: 2, 3, 8, 11, 0, 9, 1, 5, and 4. Packets sent in the second round include: 12, 6, 10, 7.

Specific embodiments are used below to describe in detail the technical solutions of this application.

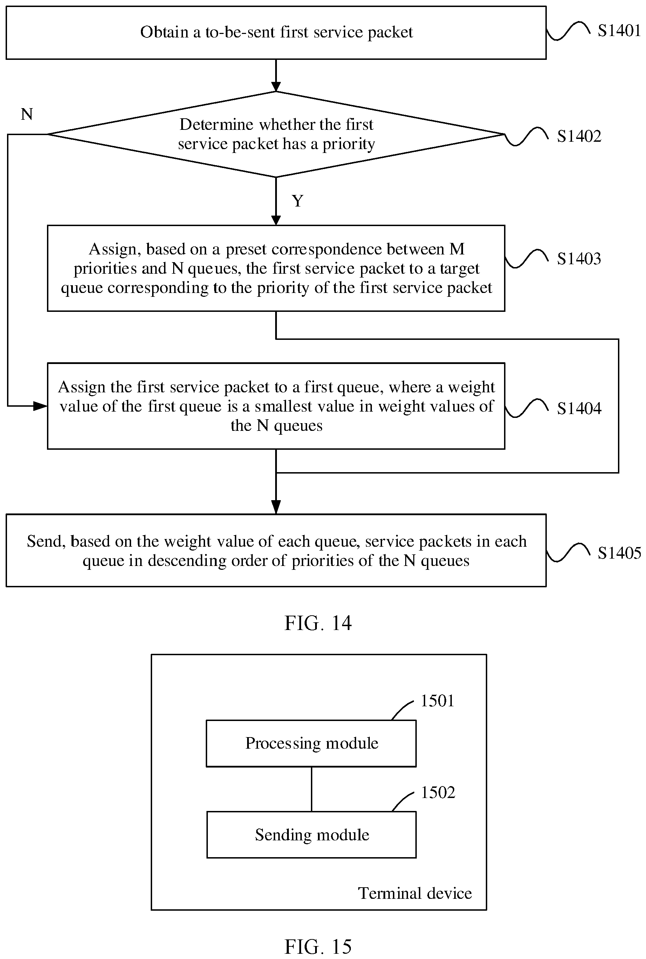

FIG. 14 is a flowchart of a data sending method according to an embodiment of this application. The data sending method provided in this embodiment may be executed by a terminal device. As shown in FIG. 14, the data sending method provided in this embodiment may include the following steps.

S1401: Obtain a to-be-sent first service packet.

The first service packet is a service packet that can be transmitted through Wi-Fi communication, or a service packet that is transmitted to a bottom-layer Wi-Fi chip after being processed by an upper-layer application.

A developer and functions of the upper-layer application are not limited in this embodiment of this application. Optionally, the application may be an application provided by a system of the terminal device, for example, a browser, an email application, or a smart home application. Applications provided by a system may be different for different types of terminal devices. Optionally, the application may be an application developed by a third party and installed by a user on the terminal device, for example, a browser, a chat app, a video app, or a file sharing app.

S1402: Determine whether the first service packet has a priority.

The first service packet may have a priority, or may not have a priority, which is related to an upper-layer application that processes the first service packet. For example, some applications provided by the system of the terminal device may support adding a priority to a service packet. In this case, the first service packet has a priority. Some applications developed by the third party may not support adding a priority to a service packet. In this case, the first service packet does not have a priority.

If the first service packet has a priority, S1403 is performed. If the first service packet does not have a priority, S1404 is performed.

When the first service packet has a priority, a manner of carrying the priority in the first service packet is not limited in this embodiment of this application.

Optionally, in an implementation, the priority may be carried in a field of a service packet. Optionally, the field may be an original field in the service packet. Optionally, the priority may reuse some bits in the original field, or occupy reserved bits in the original field. Optionally, the field may be a reserved field in the service packet. Optionally, the field may be a new field in the service packet.

The following uses Table 1 to describe an example of a format of the service packet and a field carrying a priority in the service packet. However, Table 1 sets no limitation thereto. Table 1 shows a packet format specified in the 802.3 protocol. The first service packet may carry a priority by reusing a "user priority" part in a "Q-Tag" field. In this embodiment of this application, a correspondence between a priority and a queue is pre-established.

**Table 1**

| Field | Destination address | Source address | Q-Tag | Length/type | Data/LLC | Frame check sequence |
|---|---|---|---|---|---|---|
| Byte count | 6 bytes | 6 bytes | 4 bytes | 2 bytes | 46 to 1500 bytes | 4 bytes |

The destination address (destination address) includes six bytes, and represents a destination address of the service packet.

The source address (source address) includes six bytes, and represents a source address of the service packet.

Q-Tag (Q-Tag) includes four bytes. The first two bytes are a tag protocol identifier (TAG protocol identifier, TPID), and the last two bytes are tag control information (TAG control information, TCI). TCI includes three parts: a user priority (user_priority), a canonical format indicator (canonical format indicator, CFI), and a virtual network identifier (VLAN ID, VID). The user priority occupies three bits and can represent a maximum of eight priorities. CFI occupies one bit. When a value of CFI is 0, it indicates that a media access control (media access control, MAC) address format in the service packet is a canonical format. When a value of CFI is 1, meanings vary according to different network types. VID occupies 12 bits, and represents an identifier of a virtual local area network (virtual local area network, VLAN).

Data/LLC (Data/LLC) includes 46 to 1500 bytes. LLC represents logical link control (logic link control). A logical link control protocol is defined in IEEE 802.2.

The frame check sequence (frame check sequence) includes four bytes.

For detailed descriptions of each field, refer to the 802.3 protocol. Details are not described herein again.

Optionally, in another implementation, the priority may be encapsulated in an encapsulation structure of a Wi-Fi packet. For example, in the Linux system, the priority may be encapsulated in a socket buffer (socket buffer, skb). skb includes two parts: packet data and management data. The packet data stores actually transmitted data, for example, a packet format specified in the IEEE 802 series protocols. The management data includes additional data for a kernel to process packets, such as control information exchanged between different protocols. When an application transfers data to a socket (socket), the socket creates a corresponding socket cache and copies the data to the cache.

It should be noted that a location of the priority in the encapsulation structure of the Wi-Fi packet and a quantity of occupied bits are not limited in this embodiment of this application.

S1403: If the first service packet has a priority, assign, based on a preset correspondence between M priorities and N queues, the first service packet to a target queue corresponding to the priority of the first service packet.

M and N are integers greater than 1, and M is greater than or equal to N. A weight value is set for the queue, and the weight value is used to determine a quantity of service packets in the queue that are sent by the terminal device each time. A weight value of a queue corresponding to a first priority in the M priorities is greater than or equal to a weight value of a queue corresponding to a second priority, and the first priority is higher than the second priority.

In this embodiment of this application, specific values of M and N are not limited, correspondences between the M priorities and the N queues are not limited, and a specific value of a weight value of each queue is not limited. For example, refer to related descriptions in FIG. 9A to FIG. 13B. Details are not described herein again.

In this embodiment of this application, the N queues also have priorities, and a weight value of a high-priority queue is greater than or equal to a weight value of a low-priority queue. For a queue A corresponding to a high priority in the M priorities and a queue B corresponding to a low priority in the M priorities, a priority of the queue A is higher than a priority of the queue B. When sending a service packet, the terminal device sends a service packet in the high-priority queue first, and then sends a service packet in the low-priority queue. An example is used for description. In an example, as shown in FIG. 9A and FIG. 9B, the M priorities include priorities 1 to 5, and the priorities 1 to 5 respectively correspond to queues 1 to 5. Priorities of the queues 1 to 5 gradually decrease. The queue 1 has the highest priority, and the queue 5 has the lowest priority. Weight values of the queues 1 to 5 are 5, 4, 3, 2, and 1, respectively. Weight values of high-priority queues are greater than those of low-priority queues. In another example, as shown in FIG. 11A and FIG. 11B, the M priorities include priorities 1 to 5. The priority 1 corresponds to a queue 1, the priority 2 corresponds to a queue 2, the priority 3 corresponds to a queue 3, and the priorities 4 and 5 correspond to a queue 4. Priorities of the queues 1 to 4 decrease gradually. The queue 1 has the highest priority, and the queue 4 has the lowest priority. Weight values of the queues 1 to 4 are 4, 2, 1, and 1, respectively. A priority of the queue 3 is higher than a priority of the queue 4, and a weight value of the queue 3 is the same as a weight value of the queue 4. When sending a service packet, the terminal device sends a service packet in the queue 3 first, and then sends a service packet in the queue 4.

S1404: If the first service packet does not have a priority, assign the first service packet to a first queue. A weight value of the first queue is a smallest value in weight values of N queues.

Specifically, for a service packet without a priority, the terminal device assigns the service packet to the first queue with a lowest priority.

Optionally, in an implementation, a service packet in the first queue may include a service packet without a priority and a service packet with a low priority in M priorities. For example, as shown in FIG. 12A and FIG. 12B, both a service packet with a priority 3 and a service packet without a priority are assigned to a queue 3.

Optionally, in another implementation, the service packet in the first queue may include a service packet without a priority. For example, as shown in FIG. 13A and FIG. 13B, all service packets without a priority are assigned to a queue 4.

S1405: Send, based on the weight value of each queue, service packets in each queue in descending order of priorities of the N queues.

Specifically, in descending order of the priorities of the N queues, for a first queue with a highest priority, a quantity (marked as Q) of service packets that can be sent by the terminal device each time is determined based on a weight value of the queue, and whether a quantity of service packets in the queue is currently greater than or equal to Q is determined. If the quantity of service packets in the queue is currently greater than or equal to Q, the terminal device sends Q service packets in the queue. If the quantity of service packets in the queue is currently less than Q, the terminal device sends all service packets in the queue. Then, for a second queue whose priority is lower than that of the first queue, service packets in the second queue are sent in a processing manner of the first queue, and so on, until service packets in the last queue with a lowest priority are sent. Then, the terminal device cyclically sends service packets in the N queues in descending order of the priorities of the N queues. For example, for a service packet sending process, refer to related descriptions in FIG. 9A to FIG. 13B.

It can be learned that the data sending method provided in this embodiment is applicable to a scenario in which a terminal device simultaneously communicates with a plurality of devices through Wi-Fi and the terminal device operates in an SBSC mode. After obtaining the to-be-sent first service packet, the terminal device determines whether the first service packet has a priority. When the first service packet has a priority, the terminal device may assign, based on a correspondence between a priority and a queue, the first service packet to a target queue corresponding to the priority of the first service packet. When the first service packet does not have a priority, the terminal device may assign the first service packet to a queue with a lowest priority. Each queue has a weight value. The terminal device sequentially sends service packets in each queue in descending order of priorities of a plurality of queues based on weight values respectively corresponding to the plurality of queues. When sending a service packet, the terminal device considers a priority of the service packet, so that a high-priority service packet is preferably sent. In the SBSC mode, a transmission delay of the high-priority service is reduced, and a QoS requirement of the high-priority service is met. In addition, although a low-priority service packet is sent in a small proportion, the low-priority service packet may also be sent. A low-priority service function is not affected.

Optionally, the data sending method provided in this embodiment may further include: running a first application, and adding a priority to the first service packet.

The first application supports adding a priority to a service packet. A developer and functions of the first application are not limited in this embodiment of this application. The first application may be an application provided by a system of the terminal device, or an application developed by a third party and installed on the terminal device.

The first application is related to the first service packet. Optionally, the first service packet may be a service packet generated when the terminal device runs the first application. Optionally, the first service packet may be a service packet obtained by the first application from another processing module of the terminal device.

Optionally, adding the priority to the first service packet may include: adding, to the first service packet based on a correspondence between a type of a service packet and a priority of the service packet, a priority corresponding to a type of the first service packet.

It should be noted that the correspondence between the type of the service packet and the priority of the service packet is not limited in this embodiment of this application.

It should be noted that an implementation of the priority is not limited in this embodiment of this application. For example, if there are eight priorities, a value may be a decimal number 0 to 7, and is represented by using 3 bits. As defined, the value 0 indicates the highest priority and the value 7 indicates the lowest priority, or that the value 0 indicates the lowest priority and the value 7 indicates the highest priority.

It may be understood that, to implement the foregoing functions, the terminal device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the terminal device may be divided into functional modules based on the foregoing method examples, for example, each functional module may be obtained through division based on each corresponding function, or two or more functions may be integrated into one processing module. The integrated module may be implemented in a form of hardware. It should be noted that, in embodiments of this application, module division is an example, and is merely a logical function division. In actual implementation, another division manner may be used.

Each functional module is obtained through division based on each corresponding function. FIG. 15 is a schematic diagram of a structure of a terminal device according to an embodiment of this application. As shown in FIG. 15, the terminal device may be used as a first electronic device, and may include a processing module 1501 and a sending module 1502.

The processing module 1501 is configured to obtain first data of a first service at a first moment, and obtain second data of a second service at a second moment. The first moment is earlier than the second moment, and a priority of the first data is lower than a priority of the second data. The first electronic device performs the first service through a first Wi-Fi connection to a second electronic device. The first electronic device performs the second service through a second Wi-Fi connection to a third electronic device. Both the first Wi-Fi connection and the second Wi-Fi connection use a first channel of a first frequency band.

The sending module 1502 is configured to send the second data at a third moment, and send the first data at a fourth moment. The third moment is earlier than the fourth moment.

It should be noted that all related content of the steps in the foregoing method embodiments may be cited in function descriptions of corresponding functional modules. Details are not described herein again.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The sending module may be specifically a device, for example, a radio frequency circuit, a Bluetooth chip, or a Wi-Fi chip, that interacts with another electronic device.

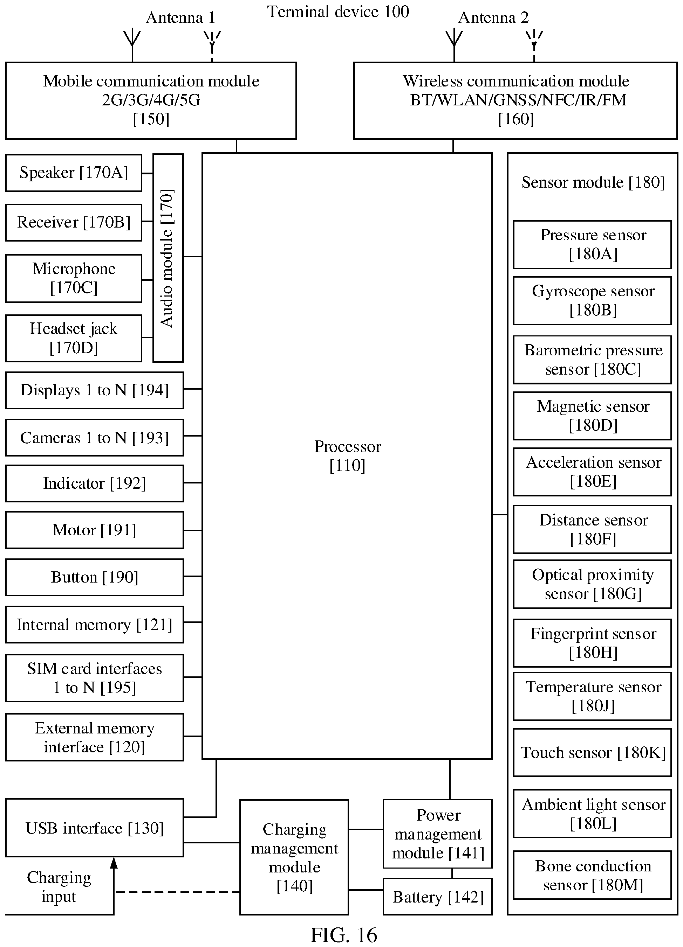

An embodiment of this application further provides a terminal device. FIG. 16 is a schematic diagram of another structure of a terminal device according to an embodiment of this application.

As shown in FIG. 16, a terminal device 100 may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (Subscriber Identification Module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a memory, a video codec, a digital signal processor (Digital Signal Processor, DSP), a baseband processor, a neural-network processing unit (Neural-network Processing Unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like.

The I2C interface is a two-way synchronization serial bus, and includes one serial data line (Serial Data Line, SDA) and one serial clock line (Serial Clock Line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication to sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (Camera Serial Interface, CSI), a display serial interface (Display Serial Interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be used to connect to the charger to charge the terminal device 100, or may be used to transmit data between the terminal device 100 and a peripheral device, or may be configured to connect to a headset for playing audio through the headset. The interface may alternatively be used to connect to another terminal device, for example, an AR device.

It can be understood that an interface connection relationship between the modules illustrated in this embodiment of this application is merely an example for description, and does not constitute a limitation on the structure of the terminal device 100. In some other embodiments of this application, the terminal device 100 may alternatively use different interface connection manners in the foregoing embodiments or a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the terminal device 100. When charging the battery 142, the charging management module 140 may further supply power to the terminal device by using the power management module 141.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 100. The mobile communication module 150 may include at least one filter, a switch, a power amplifier, a low noise amplifier (Low Noise Amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component along with the mobile communication module 150 or another functional module.

The wireless communication module 160 may provide a wireless communication solution that is applied to the terminal device 100 and that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communication (Global System for Mobile Communication, GSM), a general packet radio service (General Packet Radio Service, GPRS), code division multiple access (Code Division Multiple Access, CDMA), wideband code division multiple access (Wideband Code Division Multiple Access, WCDMA), time division-synchronous code division multiple access (Time Division-Synchronous Code Division Multiple Access, TD-SCDMA), long term evolution (Long Term Evolution, LTE), BT, a GNSS, a WLAN, NFC, FM, an IR technology, and/or the like. The GNSS may include a global positioning system (Global Positioning System, GPS), a global navigation satellite system (Global Navigation Satellite System, GNSS), a BeiDou navigation satellite system (BeiDou Navigation Satellite System, BDS), a quasi-zenith satellite system (Quasi-Zenith Satellite System, QZSS), and/or a satellite based augmentation system (Satellite Based Augmentation System, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light-Emitting Diode, AMOLED), a flexible light-emitting diode (Flexible Light-Emitting Diode, FLED), a mini-LED, a micro-LED, a micro-OLED, a quantum dot light-emitting diode (Quantum Dot Light-Emitting Diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (Moving Picture Experts Group, MPEG)-1, MPEG-2, MPEG-3, and MPEG-4.

The NPU is a neural-network (Neural-Network, NN) computing processor. The NPU quickly processes input information by referring to a structure of a biological neural network, for example, a transfer mode between human brain neurons, and may further continuously perform self-learning. The NPU can implement applications such as intelligent cognition of the terminal device 100, for example, image recognition, facial recognition, speech recognition, and text understanding.

The external memory interface 120 may be configured to connect to an external memory card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the terminal device 100. In addition, the internal memory 121 may include a high-speed random access memory, or may include a nonvolatile memory, for example, at least one magnetic disk storage device, a flash memory, or a universal flash storage (Universal Flash Storage, UFS).

The terminal device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be used to listen to music or answer a hands-free call over the speaker 170A.

The receiver 170B, also referred to as an "earpiece", is configured to convert an audio electrical signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (Open Mobile Terminal Platform, OMTP) standard interface or a cellular telecommunication industry association of the USA (Cellular Telecommunication Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal device 100 determines pressure strength based on a capacitance change. When a touch operation is performed on the display 194, the terminal device 100 detects intensity of the touch operation by using the pressure sensor 180A. The terminal device 100 may further calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect values of accelerations of the terminal device 100 in various directions (usually on three axes). A magnitude and a direction of gravity may be detected when the terminal device 100 is stationary. The acceleration sensor 180E may be further configured to identify a posture of the terminal device, and is used in an application such as switching between a landscape mode and a portrait mode or a pedometer.

The distance sensor 180F is configured to measure a distance. The terminal device 100 may measure a distance by using infrared light or a laser. In some embodiments, in an image shooting scenario, the terminal device 100 may measure a distance by using the distance sensor 180F, to implement fast focusing.

The optical proximity sensor 180G may include, for example, a light-emitting diode (LED) and a light detector such as a photodiode. The light-emitting diode may be an infrared light-emitting diode. The terminal device 100 emits infrared light outward by using the light-emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed in the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may alternatively be disposed on a surface of the terminal device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, a photographing application and an audio playing application) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The terminal device 100 interacts with a network by using the SIM card, to implement functions such as calling and data communication. In some embodiments, the terminal device 100 uses an eSIM, namely, an embedded SIM card. The eSIM card may be embedded in the terminal device 100, and cannot be separated from the terminal device 100.

The terminal device provided in this embodiment may perform the foregoing method embodiments, and implementation principles and technical effect of the terminal device are similar to those of the foregoing method embodiments. Details are not described herein again.

An embodiment of this application further provides a chip system, including a processor. The processor is coupled to a memory, and the processor executes a computer program stored in the memory, to perform the method in the foregoing embodiments.

An embodiment of this application further provides a computer-readable storage medium. The computer-readable storage medium stores computer instructions. When the computer instructions are run on a terminal device, the terminal device is enabled to perform the method in the foregoing embodiments.

An embodiment of this application further provides a computer program product. When the computer program product runs on a computer, the computer is enabled to perform the foregoing related steps to implement the method in the foregoing embodiments.

It should be further understood that, in embodiments of this application, the terms "first", "second", "third", and the like are merely used for distinction and description, but shall not be understood as an indication or an implication of relative importance. "A plurality of" means two or more.

Finally, it should be noted that the foregoing embodiments are merely intended to describe the technical solutions of this application, other than limiting this application. Although this application is described in detail with reference to the foregoing embodiments, a person of ordinary skill in the art should understand that the technical solutions described in the foregoing embodiments may still be modified, or some or all of the technical features thereof may be equivalently replaced. These modifications or replacements do not make the essence of the corresponding technical solutions depart from the scope of the technical solutions of embodiments of this application.

## Claims

1. A data sending method, applied to a first electronic device, wherein the first electronic device performs a first service through a first wireless fidelity Wi-Fi connection to a second electronic device, the first electronic device performs a second service through a second Wi-Fi connection to a third electronic device, and both the first Wi-Fi connection and the second Wi-Fi connection use a first channel of a first frequency band; and
the method comprises:
obtaining first data of the first service at a first moment, and obtaining second data of the second service at a second moment, wherein the first moment is earlier than the second moment, and a priority of the first data is lower than a priority of the second data; and
sending the second data at a third moment, and sending the first data at a fourth moment, wherein the third moment is earlier than the fourth moment.

2. The method according to claim 1, wherein when the first electronic device communicates with the second electronic device, the first electronic device operates in a wireless station STA mode, and the second electronic device operates in an access point AP mode; and
when the first electronic device communicates with the third electronic device, both the first electronic device and the third electronic device operate in a wireless fidelity point-to-point Wi-Fi P2P mode.

3. The method according to claim 1, wherein the second service is a Wi-Fi P2P service.

4. The method according to claim 3, wherein the second service is a projection service or a file sharing service.

5. The method according to claim 1, wherein the second data comprises at least one of the following: projection data, video data, or audio data.

6. The method according to claim 1, wherein the first frequency band is a Wi-Fi 5 GHz frequency band.

7. The method according to any one of claims 1 to 6, wherein there are a plurality of pieces of first data, there is at least one piece of second data, and a quantity of second data sent at the third moment is greater than a quantity of first data sent at the fourth moment.

8. The method according to any one of claims 1 to 6, wherein before the obtaining first data of the first service at a first moment, and obtaining second data of the second service at a second moment, the method further comprises:
running a first application to set the priority of the first data for the first data; and
running a second application to set the priority of the second data for the second data.

9. An electronic device, used as a first electronic device, wherein the first electronic device performs a first service through a first wireless fidelity Wi-Fi connection to a second electronic device, the first electronic device performs a second service through a second Wi-Fi connection to a third electronic device, and both the first Wi-Fi connection and the second Wi-Fi connection use a first channel of a first frequency band; and
the first electronic device comprises:
one or more processors;
one or more memories; and
a transceiver, wherein
the memory stores one or more programs, and when the one or more programs are executed by the processor, the first electronic device is enabled to perform the following steps:
obtaining first data of the first service at a first moment, and obtaining second data of the second service at a second moment, wherein the first moment is earlier than the second moment, and a priority of the first data is lower than a priority of the second data; and
sending the second data at a third moment, and sending the first data at a fourth moment, wherein the third moment is earlier than the fourth moment.

10. The electronic device according to claim 9, wherein when the first electronic device communicates with the second electronic device, the first electronic device operates in a wireless station STA mode, and the second electronic device operates in an access point AP mode; and
when the first electronic device communicates with the third electronic device, both the first electronic device and the third electronic device operate in a wireless fidelity point-to-point Wi-Fi P2P mode.

11. The electronic device according to claim 9, wherein the second service is a Wi-Fi P2P service.

12. The electronic device according to claim 11, wherein the second service is a projection service or a file sharing service.

13. The electronic device according to claim 9, wherein the second data comprises at least one of the following: projection data, video data, or audio data.

14. The electronic device according to claim 9, wherein the first frequency band is a Wi-Fi 5 GHz frequency band.

15. The electronic device according to any one of claims 9 to 14, wherein there are a plurality of pieces of first data, there is at least one piece of second data, and a quantity of second data sent at the third moment is greater than a quantity of first data sent at the fourth moment.

16. The electronic device according to any one of claims 9 to 14, wherein the processor is further configured to:
run a first application to set the priority of the first data for the first data; and
run a second application to set the priority of the second data for the second data.

17. A chip system, used in a first electronic device, wherein the first electronic device performs a first service through a first wireless fidelity Wi-Fi connection to a second electronic device, the first electronic device performs a second service through a second Wi-Fi connection to a third electronic device, and both the first Wi-Fi connection and the second Wi-Fi connection use a first channel of a first frequency band; and
the chip system comprises a processor, the processor is coupled to a memory, and the processor executes a computer program stored in the memory to perform the following steps:
obtaining first data of the first service at a first moment, and obtaining second data of the second service at a second moment, wherein the first moment is earlier than the second moment, and a priority of the first data is lower than a priority of the second data; and
sending the second data at a third moment, and sending the first data at a fourth moment, wherein the third moment is earlier than the fourth moment.

18. The chip system according to claim 17, wherein when the first electronic device communicates with the second electronic device, the first electronic device operates in a wireless station STA mode, and the second electronic device operates in an access point AP mode; and
when the first electronic device communicates with the third electronic device, both the first electronic device and the third electronic device operate in a wireless fidelity point-to-point Wi-Fi P2P mode.

19. The chip system according to claim 17, wherein the second service is a Wi-Fi P2P service.

20. The chip system according to claim 19, wherein the second service is a projection service or a file sharing service.

21. The chip system according to claim 17, wherein the second data comprises at least one of the following: projection data, video data, or audio data.

22. The chip system according to claim 17, wherein the first frequency band is a Wi-Fi 5 GHz frequency band.

23. The chip system according to any one of claims 17 to 22, wherein there are a plurality of pieces of first data, there is at least one piece of second data, and a quantity of second data sent at the third moment is greater than a quantity of first data sent at the fourth moment.

24. The chip system according to any one of claims 17 to 22, wherein the processor is further configured to:
run a first application to set the priority of the first data for the first data; and
run a second application to set the priority of the second data for the second data.

25. A computer-readable storage medium, wherein the computer-readable storage medium stores computer instructions, and when the computer instructions are run on an electronic device, the electronic device is enabled to perform the method according to any one of claims 1 to 8.
